Europäisches Patentamt

European Patent Office

Office européen des brevets

(19)

(11) Veröffentlichungsnummer: **0 019 268**
**A2**

(12) # EUROPÄISCHE PATENTANMELDUNG

(21) Anmeldenummer: **80102667.5**

(22) Anmeldetag: **13.05.80**

(51) Int. Cl.³: **B 01 F 17/50**

(30) Priorität: **14.05.79 DE 2919349**

(43) Veröffentlichungstag der Anmeldung:
**26.11.80 Patentblatt 80/24**

(84) Benannte Vertragsstaaten:
**AT BE CH FR GB IT LI LU NL SE**

(71) Anmelder: **Holmen GmbH**
**DEA-Scholven-Strasse**
**D-7500 Karlsruhe 21(DE)**

(72) Erfinder: **Czerson, Horst, Dr.**
**Turmbergstrasse 24**
**D-7516 Karlsbad(DE)**

(72) Erfinder: **Köhler, Leo**
**Beethovenstrasse 32**
**D-6712 Bobenheim(DE)**

(74) Vertreter: **Lamprecht, Helmut, Dipl.-Ing.**
**Corneliusstrasse 42**
**D-8000 München 5(DE)**

(54) **Dispergator auf der Basis von Lignin-Sulfonat und Verfahren zu seiner Herstellung.**

(57) Ein Dispergator auf der Basis von Lignin-Sulfonat, bei welchem das Lignin-Sulfonat mit Aminen und Aldehyden kondensiert ist. Zur Herstellung wird das Lignin-Sulfonat mit einer Konzentration von 20-60% mit bis zu 40% eines Aldehyds und mit bis zu 20% eines Amins versetzt und bei etwa 50-150°C mindestens eine Stunde lang kondensiert.

EP 0 019 268 A2

Croydon Printing Company Ltd.

Holmen GmbH

DEA-Scholven-Straße

D-7500 Karlsruhe 21

------------------------------------------------

Dispergator auf der Basis von Lignin-Sulfonat
und Verfahren zu seiner Herstellung

------------------------------------------------

Die Erfindung betrifft einen Dispergator auf der Basis
von Lignin-Sulfonat und ein Verfahren zu seiner Herstellung. Insbesondere betrifft die Erfindung einen
Dispergator für Farbstoffe, Schädlingsbekämpfungsmittel, Beton, Ölbohrschlamm oder ähnliche Anwendungsgebiete.

- 2 -

Die Aufgabe eines Dispergators besteht einerseits darin, dem zu dispergierenden Produkt eine gute Schwebefähigkeit zu verleihen und beim Einsatz des Dispergators in Farbstoffen zusätzlich zu dieser guten Schwebefähigkeit auch noch thermostabile Dispersionen zu liefern.

Es ist an sich bekannt, daß Lignin-Sulfonate Dispergierwirkung aufweisen, die bisher bekannten Lignin-Sulfonate sind jedoch nicht thermostabil und eignen sich deshalb nicht zur Herstellung thermostabiler Dispersionen.

Es ist weiterhin bekannt, daß Lignin-Sulfonate auf der Basis von Ligninen, die nach dem Sulfat-Aufschluß gewonnen werden, bezüglich ihrer Dispergiereigenschaft und ihrer Thermostabilität bessere Eigenschaften besitzen als bisher bekannte Lignin-Sulfonate auf der Basis von Ligninen, die nach dem Sulfit-Aufschluß gewonnen werden. Wegen der erheblichen Geruchsbelästigung im weiteren Umkreis von entsprechenden Anlagen ist das Sulfat-Aufschlußverfahren für die Zellstoffgewinnung in dicht besiedelten Gebieten, wie sie überwiegend in Europa anzutreffen sind, wenig geeignet, so daß Lignin-Sulfonate auf der Basis von Sulfat-Ligninen in diesen Gebieten nicht zur Verfügung stehen, sie müssen vielmehr - zumeist aus Übersee - importiert werden und sind außerdem sehr teuer.

- 3 -

Es besteht deshalb die Aufgabe, einen Dispergator auf der Basis von Lignin-Sulfonat zu schaffen, der eine verbesserte bzw. eine für die Herstellung thermostabiler Dispersionen ausreichende Thermostabilität aufweist, wobei als Basisstoff auch Lignin-Sulfonat verwendbar sein soll, welches durch das Sulfit-Aufschlußverfahren gewonnen wurde, was einerseits aus preislichen Gründen, andererseits auch aus Gründen des Umweltschutzes erstrebenswert ist, weil dadurch die anfallene Sulfitablauge einem sinnvollen Verwendungszweck zugeführt wird.

Die Lösung der gestellten Aufgabe besteht darin, daß das Lignin-Sulfonat mit Aminen und Aldehyden kondensiert ist, und zwar vorzugsweise mit Formaldehyd und Anilin.

Versuche haben gezeigt, daß eine unter Verwendung des erfindungsgemäßen Dispergators hergestellten Dispersion Temperaturen bis über $110^{\circ}C$ aushält.

Außerdem hat sich gezeigt, daß die Dispergierwirkung verbessert ist und daß diese verbesserten Eigenschaften auch unter Verwendung von Lignin-Sulfonat erreicht werden können, das aus Sulfit-Ablauge gewonnen wird.

Ein Verfahren zur Herstellung des erfindungsgemäßen Dispergators besteht darin, daß Lignin-Sulfonat mit einer Konzentration von 20-60 % mit bis zu 40 % eines Aldehyds und bis zu 20 % eines Amins versetzt und bei etwa 50-150°C mindestens eine Stunde lang kondensiert wird.

Dabei besteht eine zweckmäßige Ausführungsform des erfindungsgemäßen Verfahrens darin, daß man das Lignin-Sulfonat zunächst mit einem der beiden Zusätze versetzt, dann etwa eine Stunde lang bei 50-150°C kondensiert, dann das Gemisch mit dem anderen Zusatz versetzt und wiederum mindestens eine Stunde lang bei 50-150°C kondensiert.

Noch eine weitere zweckmäßige Ausführungsform des Verfahrens besteht darin, daß man dabei einen Teil des Zusatzes, mit welchem das Lignin-Sulfonat zunächst versetzt wird, mit einem Anteil von bis zu 10 % nach der Kondensation mit dem zweiten Zusatz zugibt und nochmals bei 50-100°C kondensiert.

Vorzugsweise wird Lignin-Sulfonat aus Ablauge des Sulfit-Aufschlußverfahrens zur Zellstoffgewinnung verwendet.

- 5 -

Dabei kann die Sulfitablauge mit dem Lignin-Sulfonat vergoren oder unvergoren, extrahiert, ultrafiltriert, chemisch entzuckert oder teilentsulfoniert sein.

Die Lignin-Sulfonatlauge kann als Kation ein aus der Gruppe Calzium, Magnesium, Barium, Aluminium, Natrium, Kalium, Ammonium, Eisen, Chrom und Titan ausgewähltes Kation enthalten.

Um die Eigenschaften des erfindungsgemäßen Dispergators zu prüfen, wurde ein Dispergator nach zwei Ausführungsbeispielen hergestellt und mit vier anderen Dispergatoren, nämlich Natrium-Ligninsulfonat aus Sulfit-Ablauge, Ammonium-Ligninsulfonat aus Sulfitablauge, Spezial-Dispergator auf der Basis kondensierter Aromaten und Natrium-Ligninsulfonat aus Sulfatablauge verglichen. Die beigefügte Tabelle 1 zeigt das Ergebnis eines Dispersions- und Temperaturtests mit Farbe, wobei die geprüfte Farbpaste wie folgt hergestellt wurde:

60 g Farbstoff

10 g Glykol

10 g Dispergator und

20 g Wasser

werden 72 Stunden in einer Kugelmühle gemahlen und dann geprüft.

- 6 -

- 6 -

Außerdem wurde ein WHO-Dispersionstest mit Schwefel nach Fischer durchgeführt und die "Fischer Schwebezahl" ermittelt. Dabei werden

80 g elementarer Schwefel

20 g Dispergator und

50 g Wasser

72 Stunden lang in Kugelmühlen gemahlen, bei $50^{\circ}$C aufgetrocknet und nach Zerkleinern hinsichtlich der Schwebefähigkeit gemessen. Das Ergebnis ist in der Tabelle 2 zusammengefaßt.

Beispiel 1:

Natrium-Lignin-Sulfonat wird in einer Konzentration von 40 % mit Formaldehyd eine Stunde lang bei $80^{\circ}$C ankondensiert, dann wird das Gemisch mit 20 % Anilin versetzt und eine Stunde wieder bei $80^{\circ}$C weiter kondensiert. Abschließend werden dem Gemisch 0,8 % Formaldehyd beigefügt und es wird eine Stunde lang bei $80^{\circ}$C nachkondensiert.

Beispiel 2:

Natrium-Lignin-Sulfonat wird in einer Konzentration von 40 % mit 20 % Anilin eine Stunde lang bei $80^{\circ}$C ankondensiert, dann wird das Gemisch mit 8,8 % Formaldehyd versetzt und zwei Stunden lang bei $80^{\circ}$C weiter kondensiert.

- 7 -

Die Versuchsergebnisse wurden nicht verändert, bei einer alternativen Ausführungsform des zweiten Beispiels, bei welcher Anilin und Formaldehyd gemeinsam dem Natrium-Lignin-Sulfonat zugegeben werden und eine Kondensation bei $80^{\circ}$C über zwei Stunden durchgeführt wird.

Tabelle 1          <u>Dispersions- und Temperaturtest mit Farbe</u>

| Produkt | Disper-sionsgrad nach 72 h | Dispersion nach jeweils $24^h$ Temperaturtest | | | | | | |
|---|---|---|---|---|---|---|---|---|
| | | 60°C | 70°C | 80°C | 90°C | 100°C | 110°C | 120°C |
| Natrium-Ligninsulfonat aus Sulfitablauge | 100 % | gut | gut | gebro-chen | --- | --- | --- | --- |
| Ammonium-Ligninsulfonat aus Sulfitablauge | 100 % | gut | gut | gebro-chen | --- | --- | --- | --- |
| Spezialdispergator auf Basis kondensierter Aromaten | 100 % | gut | gut | gebro-chen | --- | --- | --- | --- |
| Natrium-Ligninsulfonat aus Sulfatablauge | 100 % | gut | gut | gut | gebro-chen | --- | --- | --- |
| Spezialdispergator nach Beispiel 1 | 100 % | gut | gut | gut | gut | gut | gut | gebro-chen |
| Spezialdispergator nach Beispiel 2 | 100 % | gut | gut | gut | gut | gut | gut | gebro-chen |

Tabelle 2

WHO - Dispersionstest mit Schwefel
nach Fischer

Dabei werden 80 gr. elementarer Schwefel mit
20 gr. Dispergator + 50 gr. Wasser 72 $^h$ in
Kugelmühlen gemahlen, bei 50$^o$C aufgetrocknet
und nach zerkleinern die Schwebefähigkeit
gemessen.

| Produkt | Fischer-Schwebezahl |
|---|---|
| Natrium-Ligninsulfonat aus Sulfitablauge | 60 - 65 % |
| Ammonium-Ligninsulfonat aus Sulfitablauge | 65 - 70 % |
| Spezialdispergator auf Basis kondensierter Aromaten | 70 - 75 % |
| Natrium-Ligninsulfonat aus Sulfatablauge | 70 - 75 % |
| Spezialdispergator nach 1 | 80 - 85 % |
| Spezialdispergator nach 2 | 75 - 80 % |

- 1 -

Patentansprüche

1. Dispergator auf der Basis von Lignin-Sulfonat, dadurch gekennzeichnet, daß das Lignin-Sulfonat mit Aminen und Aldehyden kondensiert ist.

2. Dispergator nach Anspruch 1, dadurch gekennzeichnet, daß das Lignin-Sulfonat aus Ablauge des Sulfit-Aufschlußverfahrens zur Zellstoffgewinnung stammt.

3. Dispergator nach Anspruch 1 oder 2, dadurch gekennzeichnet, daß das Amin Anilin ist.

4. Dispergator nach einem der Ansprüche 1 bis 3, dadurch gekennzeichnet, daß das Aldehyd Formaldehyd ist.

5. Verfahren zur Herstellung eines Dispergators auf der Basis von Lignin-Sulfonat nach Anspruch 1, dadurch gekennzeichnet, daß Lignin-Sulfonat mit einer Konzentration von 20-60 % mit bis zu 40 % eines Aldehyds und mit bis zu 20 % eines Amins versetzt und bei etwa 50-150°C mindestens eine Stunde lang kondensiert wird.

2

6. Verfahren nach Anspruch 5, dadurch gekennzeichnet, daß man das Lignin-Sulfonat zunächst mit einem der beiden Zusätze versetzt, dann etwa eine Stunde lang bei etwa 50-150$^{o}$C kondensiert, dann das Gemisch mit dem anderen Zusatz versetzt und wiederum mindestens eine Stunde lang bei etwa 50-150$^{o}$C kondensiert.

7. Verfahren nach Anspruch 6, dadurch gekennzeichnet, daß man einen Teil des Zusatzes, mit welchem das Lignin-Sulfonat zunächst versetzt wird, mit einem Anteil von bis zu 10 % nach der Kondensation mit dem zweiten Zusatz zugibt und nochmals bei 50-150$^{o}$C kondensiert.

8. Verfahren nach einem der Ansprüche 5 bis 7, dadurch gekennzeichnet, daß das Lignin-Sulfonat vergoren ist.

9. Verfahren nach einem der Ansprüche 5 bis 7, dadurch gekennzeichnet, daß das Lignin-Sulfonat unvergoren ist.

10. Verfahren nach einem der Ansprüche 5 bis 9, dadurch gekennzeichnet, daß das Lignin-Sulfonat extrahiert ist.

- 3 -

- 3 -

11. Verfahren nach einem der Ansprüche 5 bis 10, dadurch gekennzeichnet, daß das Lignin-Sulfonat ultrafiltriert ist.

12. Verfahren nach einem der Ansprüche 5 bis 11, dadurch gekennzeichnet, daß das Lignin-Sulfonat chemisch entzuckert ist.

13. Verfahren nach einem der Ansprüche 5 bis 12, dadurch gekennzeichnet, daß das Lignin-Sulfonat teilentsulfoniert ist.

14. Verfahren nach einem der Ansprüche 5 bis 13, dadurch gekennzeichnet, daß Lignin-Sulfonat als Ablauge des Sulfit-Aufschlußverfahrens zur Zellstoffgewinnung verwendet wird.

15. Verfahren nach einem der Ansprüche 5 bis 14, dadadurch gekennzeichnet, daß die Lignin-Sulfatlauge als Kation ein aus der Gruppe Calzium, Magnesium, Barium, Aluminium, Natrium, Kalium, Ammonium, Eisen, Chrom und Titan ausgewähltes Kation enthält.

- 4 -